# EUROPEAN PATENT APPLICATION

(11) **EP 3 272 712 A1**
(43) Date of publication of application: **24.01.2018**
(21) Application number: 16765160.3
(22) Date of filing: 17.02.2016
(51) Int. Cl.: C02F 1/16, B01D 3/00, B01D 1/28

(54) **DISTILLATION SYSTEM USING WASTE HEAT**

(30) Priority: 19.03.2015 KR 20150038313
(71) Applicant: Sunteco Limited, Anyang-si, Gyeonggi-do 14119 (KR)
(72) Inventor: LEE, Joo Sun, Seongnam-si Gyeonggi-do 13479 (KR)
(74) Representative: Beckord & Niedlich
(86) International application number: PCT/KR2016/001594
(87) International publication number: WO 2016/148404

(57) **Abstract**

The present invention relates to a distillation system using waste heat. The distillation system using waste heat in accordance with the present invention comprises: a waste heat supply which is supplied with feedstock, separates the feedstock by boiling point differences, and generates waste heat during the separation process of the feedstock; a heat exchange unit in which water supplied from a water source is vaporized by undergoing heat exchange with the waste heat supplied from the waste heat supply; a mechanical vapor recompression (MVR) module which compresses water vapor supplied from the heat exchange unit; and a waste water supply unit which supplies the heat exchange unit with waste water generated in a separate process so as to increase the amount of water vapor provided to the mechanical vapor recompression module.

## Description

### 1. Field

The present invention relates to a distillation system using waste heat, and more particularly, to a distillation system using waste heat, wherein in the case of supplying, to a mechanical vapor recompression module, water vapor generated through a heat-exchange performed, in a heat-exchange unit, between water and the waste heat supplied from a waste heat supply source, waste water remaining after being used in another process is supplied to the heat-exchange unit, thereby increasing the amount of water vapor supplied to the mechanical vapor recompression module.

### 2. Background

A distillation system is for evaporating and separating mixture which exists in a feedstock by difference of boiling point. On an upper portion of the distillation system, a high volatile component of the mixture is evaporated and separated in the form of overhead vapor, and on a lower portion of the distillation system, a low volatile component of the mixture is separated in a non-distilled form. Here, the high volatile component and the low volatile component may each be a single component, or a mixture of two or more components.

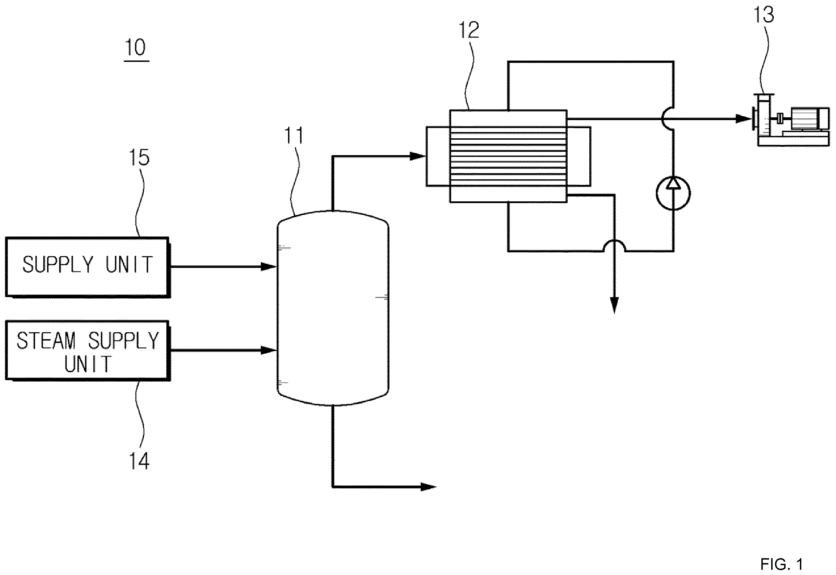

FIG. 1 is a view schematically illustrating a conventional distillation system having a stripping vessel. Referring to FIG. 1, the conventional distillation system 10 having a stripping vessel is configured to include the stripping vessel 11 where feedstock supplied from a supply unit 15 is separated into a low volatile component and a high volatile component, and a condensation-evaporator 12 where the overhead vapor of the high volatile component is condensed.

Using the stripping vessel 11, the high volatile component is removed and refined to be recovered as raw component, and the low volatile component with high viscosity is dried to obtain a final product. When steam is supplied from a steam supply unit 14 to the stripping vessel 11, the steam directly contacts the mixed component with high viscosity existing on a lower portion of the stripping vessel 11 and transfers heat, and by this heat, the high volatile component, of the mixed component, is evaporated and discharged as overhead vapor together with water vapor, while the low volatile component, of the mixed component, is discharged to the outside together with condensate water of the steam.

The condensation-evaporator 12 is configured to condense the overhead vapor supplied from the stripping vessel 11 to transfer a maximum amount of heat to water, thereby generating water vapor having an amount of heat corresponding to the transferred heat. The water that received heat from the overhead vapor becomes saturated water vapor, and is supplied to a compression module (not illustrated).

Since there is a problem that the compression of the overhead vapor requires excessive compression, the condensation-evaporator 12 is used to generate saturated water vapor by the heat-exchange with the overhead vapor.

However, since the overhead vapor supplied to the condensation-evaporator 12 is limited to the overhead vapor which is discharged from the stripping vessel 11, there is a problem that the amount of the generated saturated water vapor is limited.

### SUMMARY

Therefore, a purpose of the present disclosure is to solve the aforementioned problems of prior art, that is, to provide a distillation system using waste heat, where, in the case of supplying, to a mechanical vapor recompression module, water vapor generated through a heat-exchange performed, in a heat-exchange unit, between water and waste heat supplied from a waste heat supply source, waste water remaining after being used in another process is supplied to the heat-exchange unit so as to be depressurization-evaporated under the same pressure as the intake pressure of the mechanical vapor recompression module, thereby not requiring a separate feature and increasing the amount of saturated water vapor being supplied to the mechanical vapor recompression module.

The aforementioned purpose is achieved by a distillation system using waste heat, the system comprising: a waste heat supply source which receives feedstock and separates the feedstock by a difference of boiling point, wherein waste heat is generated during separation of the feedstock; a heat-exchange unit which receives water from a water supply source and which evaporates the water by heat-exchange of the water with the waste heat supplied from the waste heat supply source; a mechanical vapor recompression module (MVR) which receives water vapor generated in the heat-exchange unit and which compresses the water vapor; and a waste water supply which supplies waste water generated in a separate process to the heat-exchange unit such that the amount of saturated water vapor which is supplied to the mechanical vapor recompression module is increased.

Here, it is preferable that the waste water supply unit supplies the waste water to a gas-liquid separation unit of the heat-exchange unit.

Here, it is preferable that in the gas-liquid separation unit, water vapor generated by evaporation of the water and non-evaporated water are separated.

Here, it is preferable that the waste water is hot water.

Here, it is preferable that the waste heat supply source is an evaporation-separator, and the waste heat is overhead vapor which is discharged from the evaporation-separator.

Here, it is preferable that at least some of the saturated water vapor compressed in the mechanical vapor recompression module is supplied to the waste heat supply source.

Here, it is preferable that the heat-exchange unit is a vertical falling film evaporator (VFFE).

Here, it is preferable that the heat-exchange unit is a horizontal falling film evaporator (HFFE).

Here, it is preferable that the heat-exchange unit is a kettle-type heat-exchanger.

According to the present disclosure, there is provided a distillation system using waste heat, where, in the case of supplying, to a mechanical vapor recompression module, water vapor generated through a heat-exchange performed, in a heat-exchange unit, between water and the waste heat supplied from a waste heat supply source, waste water remaining after being used in another process is supplied to the heat-exchange unit, thereby increasing the amount of water vapor being supplied to the mechanical vapor recompression module.

Further, there is provided a distillation system using waste heat, capable of adding water vapor generated from depressurization-evaporation of waste water, with water vapor generated through a heat-exchange between water and waste heat supplied from a waste heat supply source, and supplying the resulting water vapor to a mechanical vapor recompression module, thereby obtaining an effect of increasing the mutual economic value in different waste heat sources, although the investment feasibility of the mechanical vapor recompression module of utilizing the waste water to compress and recycle the depressurized water vapor is excluded since the investment feasibility is too low.

Further, there is provided a distillation system using waste heat, that supplies waste water to a heat-exchange unit and compresses the waste water to a temperature and pressure required in a mechanical vapor recompression module, and thus does not require a separate feature such as a flash vessel and the like for expanding and evaporating the waste water.

Further, there is provided a distillation system using waste heat, capable of performing, in a heat-exchange unit, a heat-exchange between water and overhead vapor, that is waste heat, and thus the system being applicable regardless of the component of the high volatile material and of the difference of saturated vapor pressure, thereby providing a distillation system using waste heat, that is undeterred by the type of the subject component being stripped.

### BRIEF DESCRIPTION OF THE DRAWINGS

FIG. 1 is a view schematically illustrating a conventional distillation system having a stripping vessel;
FIG. 2 is a view schematically illustrating a distillation system using waste heat according to an embodiment of the present disclosure;
FIG. 3 is a schematic explanation view of a case where hot water is not supplied to a heat-exchange unit in the distillation system using waste heat of FIG. 2;
FIG. 4 is an application example of the distillation system using waste heat of FIG. 2; ,
FIG. 5 is a perspective view of a heat-exchange unit of the distillation system using waste heat of FIG. 2;
FIG. 6 is a view schematically illustrating a heat-exchange state of the heat-exchange unit of the distillation system using waste heat of FIG. 2;
FIG. 7 is another application example of the distillation system using waste heat of FIG. 2; and
FIG. 8 is yet another application example of the distillation system using waste heat of FIG. 2.

### DETAILED DESCRIPTION

Hereinbelow, a distillation system using waste heat according to an embodiment of the present disclosure will be explained with reference to the drawings attached.

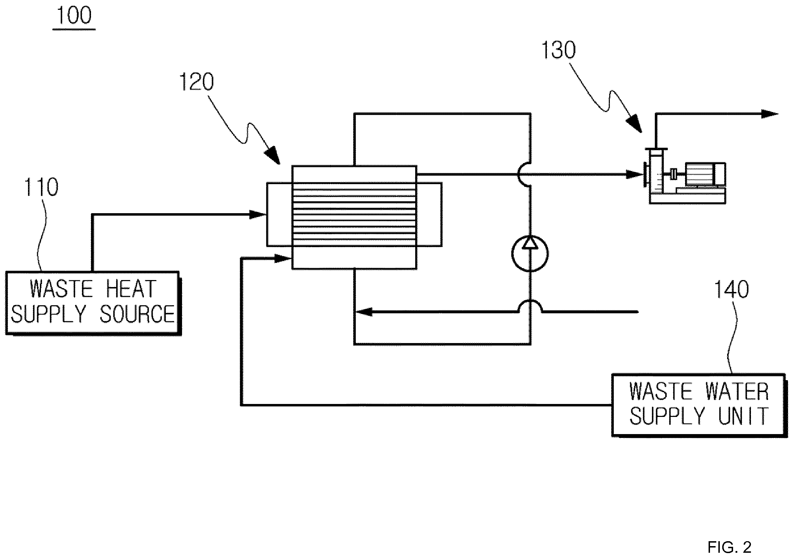

FIG. 2 is a view schematically illustrating the distillation system using waste heat according to an embodiment of the present disclosure. Referring to FIG. 2, the distillation system 100 using waste heat according to an embodiment of the present disclosure includes a waste heat supply source 110 that receives feedstock and steam and generates waste heat when separating the feedstock, a heat-exchange unit 120 that performs a heat-exchange between water and the waste heat discharged from the waste heat supply source 110, a mechanical vapor recompression module 130 that receives saturated water vapor generated in the heat-exchange unit 120 and compresses the saturated water vapor, and a waste water supply unit 140 that supplies waste water to the heat-exchange unit 120.

The waste heat supply source 110 is configured to separate the feedstock supplied through a supply unit (not illustrated) by a difference of boiling point, and to supply the waste heat generated when separating the feedstock to the heat-exchange unit 120 so that water can be evaporated in the heat-exchange unit 120. Here, the feedstock is, for example, a mixture component and the like produced upon polymerization reaction of synthetic rubber.

The distillation system essentially includes an evaporation-separator that separates components by difference of boiling point, and examples of the evaporation-separator include a distillation column, a rectification column, a stripping column and stripping vessel (stripper) and the like.

In the case of extracting a high volatile component to use the extracted high volatile component as the intended subject product, the rectification column is used as the evaporation-separator, and in the case of extracting a low volatile component to use the extracted low volatile component as the intended subject product, the stripping column or stripping vessel is used as the evaporation-separator. The stripping column is mostly used for extracting a low volatile component with low viscosity, and the stripping vessel is used for extracting a low volatile component with high viscosity.

That is, the waste heat supply source 110 refers to the evaporation-separator that may be at least one of the distillation column, rectification column, stripping column and stripping vessel depending on the subject product.

The feedstock is supplied from a raw material supply unit (not illustrated) into the waste heat supply source 110, and steam is supplied from a steam supply unit (not illustrated) into the waste heat supply source 110 in order to separate the feedstock. The steam directly contacts the low volatile component included in the feedstock and transfers heat, and by this transferred heat, the high volatile component included in the feedstock is evaporated and discharged as overhead vapor together with water vapor, and this overhead vapor is supplied to the heat-exchange unit 120. That is, the waste heat refers to the overhead vapor which is generated during the separation of the feedstock.

The heat-exchange unit 120 condenses the overhead vapor which is supplied from the waste heat supply source 110 to transfer a maximum amount of heat to water, thereby generating water vapor having an amount of heat corresponding to the transferred heat. The heat-exchange unit 120 is supplied with water from a separate water supply source, and the heat-exchange unit 120 condenses the overhead vapor to transfer heat to the water, so that the temperature and pressure of the water are the temperature and pressure required in the mechanical vapor recompression module 130.

In the present embodiment, the overhead vapor is not compressed, but instead, the water vapor generated through a heat-exchange with the overhead vapor is compressed, and therefore the system according to the present embodiment is applicable without limitation even when distilling two or more high volatile components having different saturated vapor pressures. Further, the condensed latent heat of the overhead vapor is removed by the evaporative latent heat of water, and therefore the amount of water necessary can be significantly reduced, compared to when removing condensed latent heat of the overhead vapor with sensible heat of circulating cooling water.

The mechanical vapor recompression (MVR) module 130 is for compressing the saturated water vapor generated in the heat-exchange unit 120 to provide the temperature and pressure required in the waste heat supply source 110.

The saturated water vapor supplied to the mechanical vapor recompression module 130 is compressed, and preferably, to the temperature and pressure required in the waste heat supply source 110, and then supplied to the waste heat supply source 110 to be used as a heat source for separating the feedstock.

The waste water supply unit 140 increases the amount of saturated water vapor being introduced into the mechanical vapor recompression module 130. In the present disclosure, the waste water refers to hot water which remains after being used in another process.

The saturated water vapor compressed in the mechanical vapor recompression module 130 is supplied to the waste heat supply source 110 to be used as the heat source for separating the feedstock. That is, in the present disclosure, the overhead vapor which is the waste heat generated in the waste heat supply source 110 is used to generate saturated water vapor from water in the heat-exchange unit 120, and the saturated water vapor is compressed and then the compressed saturated water vapor is used again to separate the feedstock.

However, there is a problem that since the amount of overhead vapor generated during the separation of the feedstock in the waste heat supply source 110 is limited, the amount of saturated water vapor which is generated from a heat-exchange with the overhead vapor in the heat-exchange unit is limited as well. That is, there is a problem that since the amount of the saturated water vapor supplied to the mechanical vapor recompression module 130 is limited, the saturated water vapor is insufficient to be re-supplied to the waste heat supply source 110 and to be used as the heat source.

Accordingly, in the present disclosure, hot water, that is a process water which remains after being used in another process, is supplied to the heat-exchange unit 120 through the waste water supply unit 140, thereby increasing the amount of saturated water vapor which is generated. Here, since the hot water may be from various different processes, the temperature of the hot water may vary from 100°C to 250°C.

The hot water is introduced into a gas-liquid separation unit of the heat-exchange unit 120. Here, the gas-liquid separation unit is an area where water and saturated water vapor generated by a heat-exchange between the water and the overhead vapor are separated. Otherwise, the gas-liquid separation unit is an area where the water and saturated water vapor co-exist. More specifically, in the gas-liquid separation unit, the saturated water vapor generated from the water that experienced a heat-exchange with the overhead vapor is moved towards the mechanical vapor recompression module 130, and the remaining water is discharged to be supplied to the heat-exchange unit 120 again. The hot water is supplied from the waste water supply unit 140 to the gas-liquid separation unit of the heat-exchange unit 140 and the pressure of the hot water is reduced such that the hot water has the same pressure as the intake pressure of the mechanical vapor recompression module 130. Therefore, the hot water becomes saturated water vapor having the same temperature and then the saturated water vapor is supplied to the mechanical vapor recompression module 130.

For example, when hot water having a temperature of 165 °C and a saturated vapor pressure of 7barA, is supplied to the gas-liquid separation unit and then is pressure-reduced or depressurized to 1 barA (temperature of the saturated vapor is 100 °C), an amount of heat of 65,000kcal/h is discharged as the hot water becomes water whose temperature is 100°C, and turns into water vapor of 120.6kg/h. Here, the amount of heat that the water discharges, that is, 65,000kcal/h, is derived from (165-100)°C X 1000kg/h X 1kcal/kg°C, and the water vapor of 120.6kg/h is derived from (65,000kcal/h)/(539kcal/kg). Here, 539kcal/kg is a latent heat of the water vapor having the temperature of 100°C.

Meanwhile, since the mechanical vapor recompression module 130 intakes the evaporated vapor of the gas-liquid separation unit, the evaporating pressure of the water and the depressurization-evaporating pressure of the hot water become identical to each other.

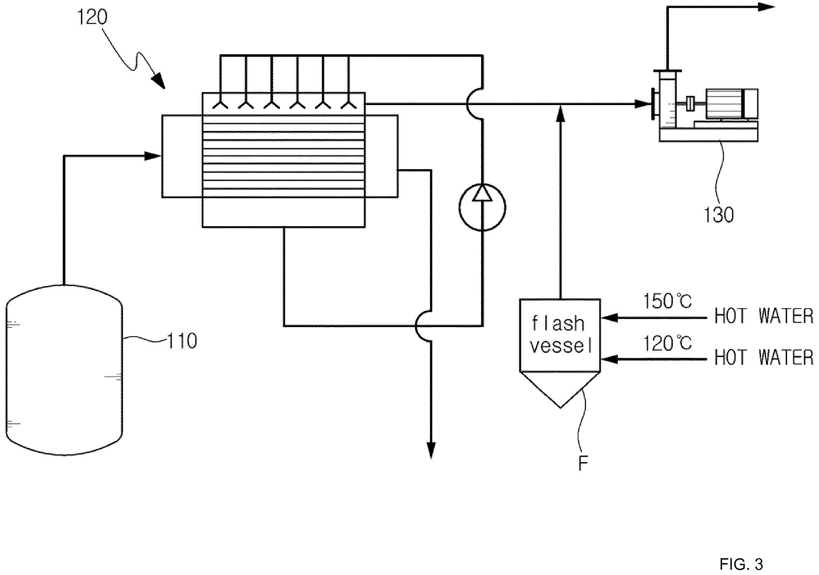

FIG. 3 is a schematic explanation view of a case where hot water is not supplied to the heat-exchange unit in the distillation system using waste heat of FIG. 2. Referring to FIG. 3, in the case of not supplying the hot water to the heat-exchange unit, a flash vessel is necessary so that saturated water vapor can be generated from the hot water and supplied to the mechanical vapor recompression module 130. That is, a separate device is needed to depressurization-evaporate the hot water.

However, the present disclosure is provided with the heat-exchange unit 120 that does not compress the overhead vapor but removes the condensed latent heat of the overhead vapor with the evaporative latent heat of water, so that significantly less amount of water is used compared to the amount of cooling water needed to remove with sensible heat. By supplying the hot water, that is the remaining waste water after being used in another process, to the heat-exchange unit 120, there is no need for a separate flash vessel, and it is possible to obtain an excellent effect of increasing the amount of saturated water vapor which is supplied to the mechanical vapor recompression module 130.

Further, the amount of heat that the waste water has will vary depending on the difference between the initial temperature and the temperature obtained through depressurization. For example, if the difference of temperature is 10°C, the flux that can become vapor through depressurization-evaporation is only 10/(540∼560)kg/h. This is calculated based on the amount of heat of the hot water which is 10 kcal/h, and the evaporative latent heat of the water vapor to be supplied to the mechanical vapor recompression module which is (540∼560)kcal/kg. Therefore, the investment feasibility of the mechanical vapor recompression module which uses the waste heat water to compress and recycle the depressurized water vapor is being excluded from the consideration since the investment feasibility is low, but in the present disclosure, water vapor generated by depressurization-evaporation of waste water is combined with water vapor generated by a heat-exchange between water and waste heat supplied from a waste heat supply source, and the resulting water vapor is supplied to the mechanical vapor recompression module 130, thereby obtaining an effect of increasing the mutual economic value in different waste heat sources.

Hereinbelow, an application example of the distillation system using waste heat according to an embodiment of the present disclosure will be explained.

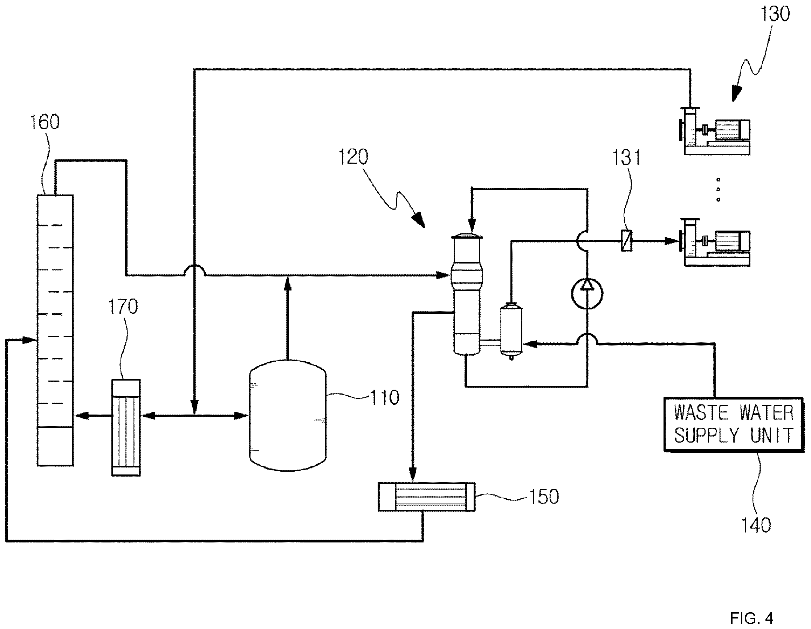

FIG. 4 is an application example of the distillation system using waste heat of FIG. 2. Referring to FIG. 4, the distillation system using waste heat according to an embodiment of the present disclosure includes a stripper module 110 to which feedstock is supplied; a heat-exchange unit 120 where a heat-exchange is performed between water and overhead vapor discharged from the stripper module 110; a mechanical vapor recompression module 130 that receives saturated water vapor generated in the heat-exchange unit 120 and compresses the received saturated water vapor; a waste water supply unit 140 that supplies waste water to the heat-exchange unit 120; a condenser 150 that receives and condenses the overhead vapor that is not condensed in the heat-exchange unit 120; a distillation column 160; and a reboiler 170.

The stripper module 110 is configured to remove a high volatile monomer, from the feedstock, to obtain a low volatile monomer and the stripper module 110 is a stripping vessel module. Here, the feedstock is, for example, a mixture and the like produced upon polymerization reaction of synthetic rubber.

To the stripper module 110, steam is supplied from a steam supply unit (not illustrated) through a valve and the like that is controlled according to conditions such as the temperature required in the stripper module 110 and the like. Further, saturated water vapor compressed in the mechanical vapor recompression module 130 is supplied to the stripper module. That is, the steam and the saturated water vapor are the same material. The steam supplied from the steam supply unit (not illustrated) directly contacts the low volatile component on a lower portion of the stripper module 110 and transfers heat, and by this heat, the high volatile component included in the mixed component is evaporated and discharged as overhead vapor together with water vapor.

Meanwhile, although it is described in the present application example that the stripper module 110 is provided as a single stripping vessel, there is no limitation thereto, and thus it is possible to provide a plurality of stripping vessels so that components having different boiling points can be separated in different stripping vessels.

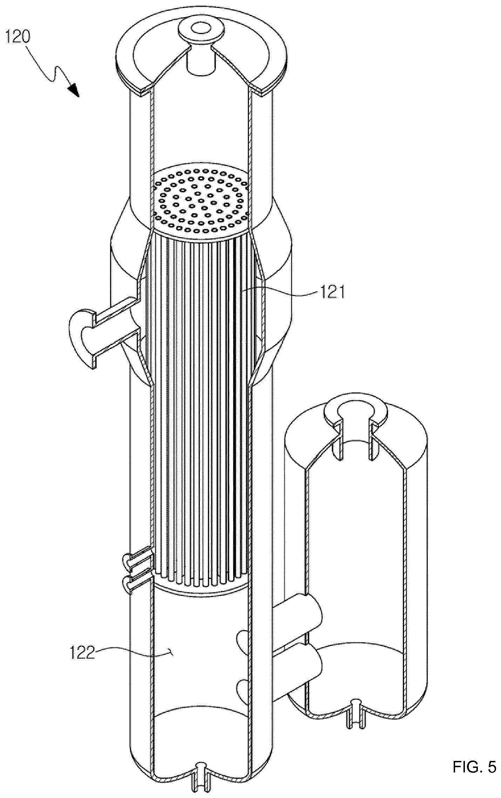

FIG. 5 is a perspective view of the heat-exchange unit of the distillation system using waste heat of FIG. 2. In the heat-exchange unit 120, the overhead vapor supplied from the waste heat supply source 110 transfers a maximum amount of heat to water when the overhead vapor is condensed, thereby generating water vapor having an amount of heat corresponding to the transferred amount of heat. The heat-exchange unit 120 is supplied with water from a separate water supply source, and the heat-exchange unit 120 transfers heat to the water when the overhead vapor is condensed so that water vapor has the temperature and pressure required in the mechanical vapor recompression module 130. In the present application example, it is to be assumed that the heat-exchange unit 120 is a vertical falling film evaporator (VFFE).

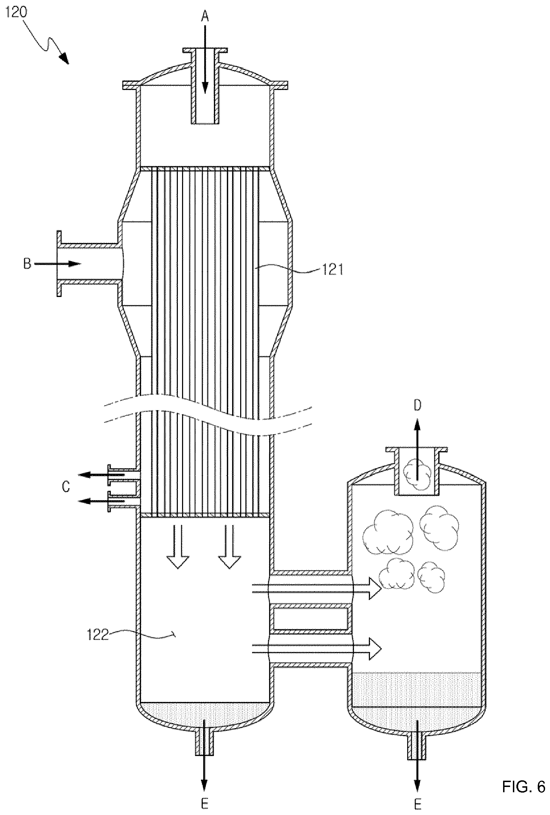

FIG. 6 is a view schematically illustrating a heat-exchange state of the heat-exchange unit of the distillation system using waste heat of FIG. 2. Referring to FIG. 6, as indicated by A, water is supplied from a separate water supply source into the heat-exchange unit 120, and the supplied water moves along the inside of a tube 121. Meanwhile, the overhead vapor discharged from the stripper module 110 is supplied into the heat-exchange unit 120 as indicated by B. Heat-exchange is performed between the water inside the tube 121 and the overhead vapor. The overhead vapor is condensed and discharged as indicated by C, and the water receives heat from the overhead vapor so that some of it becomes saturated water vapor. The water and the saturated water vapor fall and are supplied into the gas-liquid separation unit 122, and then the water is discharged as indicated by E and the saturated water vapor is discharged as indicated by D. The saturated water vapor discharged as indicated by D is supplied to the mechanical vapor recompression module 130 and the water discharged as indicated by E is circulated to be supplied into the heat-exchange unit again as indicated by A. Meanwhile, the hot water supplied from the waste water supply unit 140 is supplied to the gas-liquid separation unit 122.

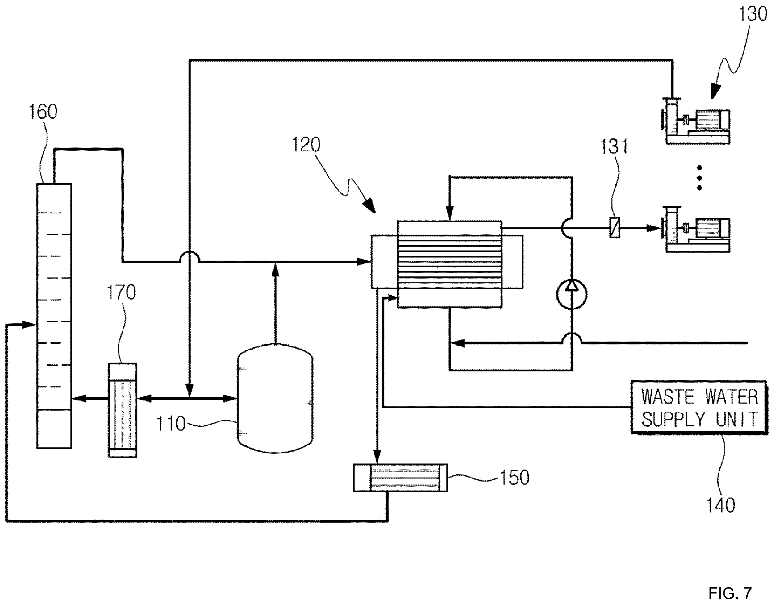

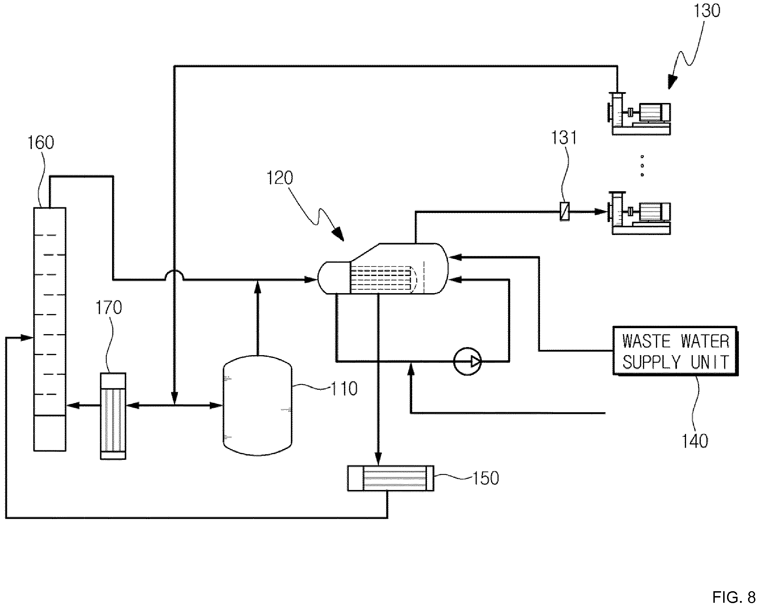

FIG. 7 is an another application example of the distillation system using waste heat of FIG. 2, and FIG. 8 is yet another application example of the distillation system using waste heat of FIG. 2. Although it is described in the present application example that the heat-exchange unit 120 is a vertical falling film evaporator (VFFE), there is no limitation thereto, and thus it is possible to provide the heat-exchange unit 120 as a horizontal falling film evaporator (HFFE) or a kettle-type heat-exchange unit.

The mechanical vapor recompression (MVR) module 130 is configured to compress the saturated water vapor generated in the heat-exchange unit 120 to have the temperature and pressure required in the stripper module 110. The saturated water vapor supplied to the mechanical vapor recompression module 130 is compressed, and preferably, compressed to have the temperature and pressure required in the stripper module 110, and then the compressed saturated water vapor is supplied to the stripper module 110 to be used as the heat source for separating the feedstock.

The mechanical vapor recompression module 130 being used may be a high-speed compressor, a low-speed air blow centrifugal compressor and the like. In the case of using the air blow centrifugal compressor, it may be a low-speed air blow centrifugal compressor having rpm which is not more than 10000 rpm, which is inexpensive, and since it operates at a low speed, there is an advantage of stable operation without any damage to the compressor even after a long-term operation. However, since the air blow centrifugal compressor operates at a lower speed of not more than 1000rpm, and preferably 4000 to 7000rpm, a compression ratio is lower than a high-speed multi-stage turbo compressor, and therefore, a plurality of said air blow centrifugal compressors are provided in order to compensate the low compression ratio. That is, the saturated water vapor saturated in the heat-exchange unit 120 is compressed in a multi-stage manner in the plurality of air blow centrifugal compressors according to a predetermined compression ratio. Although it is described in the present application example that the mechanical vapor recompression device is a low-speed air blow centrifugal compressor, any compressor may be used without limitation, as long as it is capable of compressing the saturated water vapor generated in the heat-exchange unit 120 to have the temperature and pressure required in the stripper module 110.

At an inlet of the mechanical vapor recompression module 130, a flux control unit 131 may be installed. At an initial operation of the stripper module 110, the amount of overhead vapor is not large, and thus, the amount of saturated water vapor which is generated in the heat-exchange unit 120 may be small. When the amount of the generated water vapor is less than the flux required in the mechanical vapor recompression module 130, noise and vibration may occur, causing damage to the mechanical vapor recompression module 130. In this case, it is possible to prevent the aforementioned problem by installing the flux control unit 131. Examples of the flux control unit 131 include an inlet guide vane (IGV) and an inverter motor controller, etc.

The condenser 150 is configured to condense the overhead vapor which is not condensed in the heat-exchange unit 120. The overhead vapor not condensed in the heat-exchange unit 120 is supplied to the condenser 150, and is finally condensed in the condenser 150. The condensate water generated in the condenser 150 is separated by specific gravity, and then is supplied to the distillation column 160.

The distillation column 160 is configured to receive the condensate water generated in the condenser 150 and to rectify the received condensate water, and the reboiler 170 is configured to supply steam to the distillation column 160. After the steam is supplied to the distillation column 160, condensate water of steam generated in the reboiler 170 is expansion-evaporated and then supplied to the stripper module 110 as the heat source for separating the feedstock, and the overhead vapor generated in the distillation column 160 is supplied to the heat-exchange unit 120. That is, at the initial stage of the present application example, the stripper module 110 is the waste heat supply source, and after the overhead vapor is generated in the distillation column 160, the stripper module 110 and the distillation column 160 become the waste heat supply sources.

Hereinbelow, operation of an application example of the distillation system using waste heat according to an embodiment of the present disclosure will be explained.

First, feedstock is supplied from a supply unit (not illustrated) to the stripper module 110. Steam is supplied from a steam supply unit (not illustrated) to the stripper module 110 through a valve which is controlled according to conditions required in the stripper module 110 such as temperature and the like. The steam directly contacts a low volatile component on the lower portion of the stripper module 110, and transfers heat. By this heat, a high volatile component of the feedstock having a boiling point which is not more than a certain temperature is evaporated and discharged as overhead vapor together with water vapor and the low volatile component is separated without distillation.

The overhead vapor discharged from the stripper module 110 is introduced into the heat-exchange unit 120. A portion of the overhead vapor is condensed in the heat-exchange unit 120 by transferring heat to water supplied from a separate water supply source to the heat-exchange unit 120. The water that received heat from the overhead vapor becomes saturated water vapor and the saturated water vapor is supplied to the mechanical vapor recompression module 130, and the overhead vapor that is not condensed is supplied to the condenser 150.

Meanwhile, hot water is supplied from the waste water supply unit 140 to the gas-liquid separation unit 122 of the heat-exchange unit 120. When the hot water is supplied to the gas-liquid separation unit 122 where the saturated water vapor generated by a heat-exchange with water and overhead vapor and the water are separated, the hot water becomes saturated water vapor through depressurization-evaporation and the saturated water vapor is supplied to the mechanical vapor recompression module 130. That is, the saturated water vapor generated by the water supplied from a separate water supply source, and the saturated water vapor generated by the hot water supplied from the waste water supply source 140 are supplied to the mechanical vapor recompression module 130.

The overhead vapor not condensed in the heat-exchange unit 120 is supplied to the condenser 150 and is finally condensed. The condensate water generated and separated in the condenser 150 is supplied to the distillation column 160 and is rectified. Here, for the rectification in the distillation column 160, steam is supplied from the reboiler 170. After the steam is supplied to the distillation column 160, condensate water of the steam generated in the reboiler 170 is expansion-evaporated and then supplied to the stripper module 110, and the overhead vapor generated in the distillation column 160 is supplied to the heat-exchange unit 120.

Meanwhile, the saturated water vapor supplied to the mechanical vapor recompression module 130, is compressed to have the temperature and pressure required in the stripper module 110, and then the compressed water vapor is supplied to the stripper module 110, and is used as the heat source for separating the feedstock in the stripper module 110. As hot water is supplied to the heat-exchange unit 120, the amount of the saturated water vapor being supplied to the mechanical vapor recompression module 130 becomes sufficient, and thus the amount of the steam which passes through the mechanical vapor recompression module 130 and which is supplied to the stripper module 110 becomes sufficient.

Therefore, according to the present disclosure, there is provided a distillation system using waste heat, where, in the case of supplying, to the mechanical vapor recompression module, water vapor generated through a heat-exchange performed, in the heat-exchange unit, between water and the waste heat supplied from the waste heat supply source, the waste water remaining after being used in another process is supplied to the heat-exchange unit, thereby increasing the amount of saturated water vapor supplied to the mechanical vapor recompression module, without the requirement of a separate device.

The right of the scope of the present disclosure is not limited to the aforementioned embodiments but may be realized in various types of embodiments within the claims attached hereto. It will be apparent to one of ordinary skill in the art that various changes in form and details may be made in these examples without departing from the spirit and scope of the claims and their equivalents.

## Claims

1. A distillation system using waste heat, the system comprising:
a waste heat supply source which receives feedstock and separates the feedstock by a difference of boiling point, wherein waste heat is generated during separation of the feedstock;
a heat-exchange unit which receives water from a water supply source and which evaporates the water by heat-exchange of the water with the waste heat supplied from the waste heat supply source;
a mechanical vapor recompression module (MVR) which receives water vapor generated in the heat-exchange unit and which compresses the water vapor; and
a waste water supply which supplies waste water generated in a separate process to the heat-exchange unit such that the amount of saturated water vapor which is supplied to the mechanical vapor recompression module is increased.

2. The system according to claim 1,
wherein the waste water supply unit supplies the waste water to a gas-liquid separation unit of the heat-exchange unit.

3. The system according to claim 2,
wherein in the gas-liquid separation unit, water vapor generated by evaporation of the water and non-evaporated water are separated.

4. The system according to claim 1,
wherein the waste water is hot water.

5. The system according to claim 1,
wherein the waste heat supply source is an evaporation-separator, and the waste heat is overhead vapor which is discharged from the evaporation-separator.

6. The system according to any one of claims 1 to 5,
wherein at least some of the saturated water vapor compressed in the mechanical vapor recompression module is supplied to the waste heat supply source.

7. The system according to claim 6,
wherein the heat-exchange unit is a vertical falling film evaporator (VFFE).

8. The system according to claim 6,
wherein the heat-exchange unit is a horizontal falling film evaporator (HFFE).

9. The system according to claim 6,
wherein the heat-exchange unit is a kettle-type heat-exchanger.
